# FASCICULE DE BREVET EUROPEEN

(11) **EP 1 407 906 B1**
(45) Date de publication et mention de la délivrance du brevet: **08.04.2009**
(21) Numéro de dépôt: 03022399.4
(22) Date de dépôt: 06.10.2003
(51) Int. Cl.: B60H 1/00

(54) **Dispositif de régulation thermique pour habitacle de véhicule automobile**
Vorrichtung zur thermischen Regelung für Kraftfahrzeug-Innenraum
Device for the thermal control for a motor vehicle passenger compartment

(30) Priorité: 11.10.2002 FR 0212650
(43) Date de publication de la demande: 14.04.2004
(73) Titulaire: VALEO SYSTEMES THERMIQUES, 78321 Le Mesnil St Denis Cedex (FR)
(72) Inventeur: Thuez, Jean-Luc, 78112 Fourqueux (FR)

(56) Documents cités:
- DE-A- 4 318 255
- FR-A- 2 524 060
- FR-A- 2 621 867
- FR-A- 2 697 476
- FR-A- 2 808 740

## Description

L'invention se rapporte à un dispositif de régulation thermique pour habitacle de véhicule automobile.

Elle s'applique notamment à la climatisation d'un habitacle de véhicule.

Dans les appareils actuels de climatisation et/ou de chauffage pour habitacle de véhicule automobile, les boucles d'air climatisé utilisent généralement un condenseur sur l'air placé sur le radiateur moteur, la boucle du liquide de refroidissement du moteur et la boucle de fluide de climatisation étant indépendantes. Un tel dispositif est connu du document FR 2 524 060, qui est considéré comme l'art antérieur le plus proche. Une possibilité pour améliorer les échanges thermiques est d'utiliser un seul échangeur travaillant sur l'eau et réunissant les surfaces d'échange du condenseur et du radiateur. Dans cette configuration, il faut cependant ajouter un condenseur sur l'eau pour assurer la condensation du réfrigérant. Cette solution est intéressante si et seulement si la répartition de la surface d'échange est modulaire afin de favoriser suivant, les cas, soit le circuit basse température dédié à la climatisation (moteur au ralenti ou tournant à faible vitesse), soit le circuit haute température dédié au refroidissement du moteur (surcharge thermique avec véhicule en déplacement). Or, ce mode de fonctionnement dual n'est pas optimisé et nécessite un échangeur eau/réfrigérant supplémentaire ainsi qu'un moyen de répartition lié à l'échangeur modulaire afin de privilégier la climatisation ou le refroidissement du.

Pour résoudre ce problème, l'invention propose d'enrichir le concept présenté ci-avant en modifiant l'appareil de sorte qu'il puisse notamment fonctionner en mode pompe à chaleur.

Plus précisément, l'invention a pour objet un dispositif de régulation thermique pour habitacle de véhicule automobile comprenant :
- un premier circuit fermé d'échange thermique à l'intérieur duquel circule un liquide de refroidissement et comportant un moteur thermique destiné à être refroidi et un radiateur de refroidissement fonctionnant sur l'air,
- au moins un deuxième circuit fermé d'échange thermique à l'intérieur duquel circule un fluide frigorigène et comportant un condenseur en relation thermique directe ou indirecte avec le premier circuit, un organe de détente, un évaporateur fonctionnant sur l'air disposé dans une conduite d'aération pour rafraîchir l'habitacle, et un compresseur, et
- un radiateur de chauffage en relation thermique avec le condenseur et disposé dans ladite conduite d'aération,
ledit dispositif comprenant en outre des moyens d'extraction vers l'extérieur de l'habitacle de la puissance thermique dissipée par le radiateur de chauffage ou l'évaporateur, respectivement lorsque le radiateur de chauffage fonctionne en mode pompe à chaleur sur l'air en prélevant des calories au premier circuit d'échange thermique ou lorsque l'évaporateur produit des frigories au sein du deuxième circuit d'échange thermique.

Ainsi, lorsque la température extérieure est élevée, notamment en été, le radiateur de chauffage de l'appareil de climatisation est utilisé en mode « pompe à chaleur » pour évacuer la chaleur issue du radiateur du moteur, c'est-à-dire pour délester le radiateur du moteur d'une partie de la charge thermique qui lui est demandée pour refroidir ledit moteur, que ce dernier soit au ralenti, à un régime classique de fonctionnement, ou en pleine charge. Cette charge thermique est ensuite évacuée à l'extérieur de l'habitacle pour éviter de le réchauffer alors que la température extérieure est élevée.

Lorsque la température extérieure est faible, par exemple en hiver, l'évaporateur de l'appareil de climatisation est utilisé pour produire du froid (frigories), ce qui va créer du chaud au niveau du condenseur. Le condenseur transfère ces calories ainsi produites au radiateur moteur, lequel réchauffe à son tour le radiateur de l'habitacle. Le froid est par ailleurs évacué de l'habitacle pour éviter de rafraîchir celui-ci inutilement.

De manière préférée, les moyens d'extraction sont constitués par un volet obturant la conduite de dérivation détournant l'air transportant la puissance thermique dissipée pour l'évacuer en dehors de la conduite d'aération.

Avantageusement, le volet d'obturation de la conduite de dérivation pour l'extraction de la puissance thermique dissipée par le radiateur de chauffage est indépendant du volet d'obturation de la conduite de dérivation pour l'extraction de la puissance thermique dissipée par l'évaporateur.

De préférence, chaque volet est modulable en position de manière à faire varier la puissance thermique extraite en dehors de la conduite d'aération.

Selon un mode préféré de réalisation de l'invention, le dispositif comprend en outre un troisième circuit fermé d'échange thermique à l'intérieur duquel circule un fluide de refroidissement et comportant le radiateur de refroidissement, le condenseur et ledit radiateur de chauffage.

De préférence, le radiateur de chauffage et le condenseur appartiennent également au premier circuit d'échange thermique et sont traversés par le même liquide de refroidissement.

De manière avantageuse, le radiateur de refroidissement présente une surface d'échange modulable répartie entre le premier et le troisième circuits d'échange thermique, afin de privilégier le refroidissement du moteur ou le chauffage de l'habitacle

D'autres caractéristiques, détails et avantages de l'invention ressortiront à la lecture de la description faite en référence aux dessins annexés donnés à titre d'exemple qui représentent respectivement :
- la figure 1, une schématique d'un premier mode de réalisation d'un dispositif de régulation thermique conforme à l'invention,
- la figure 2, une vue schématique d'un deuxième mode de réalisation d'un dispositif de régulation thermique conforme à l'invention, et
- les figures 3a à 3e, des vues schématiques en coupe d'un conduit de circulation d'air à l'intérieur duquel est placé une partie du dispositif des figures 1 ou 2.

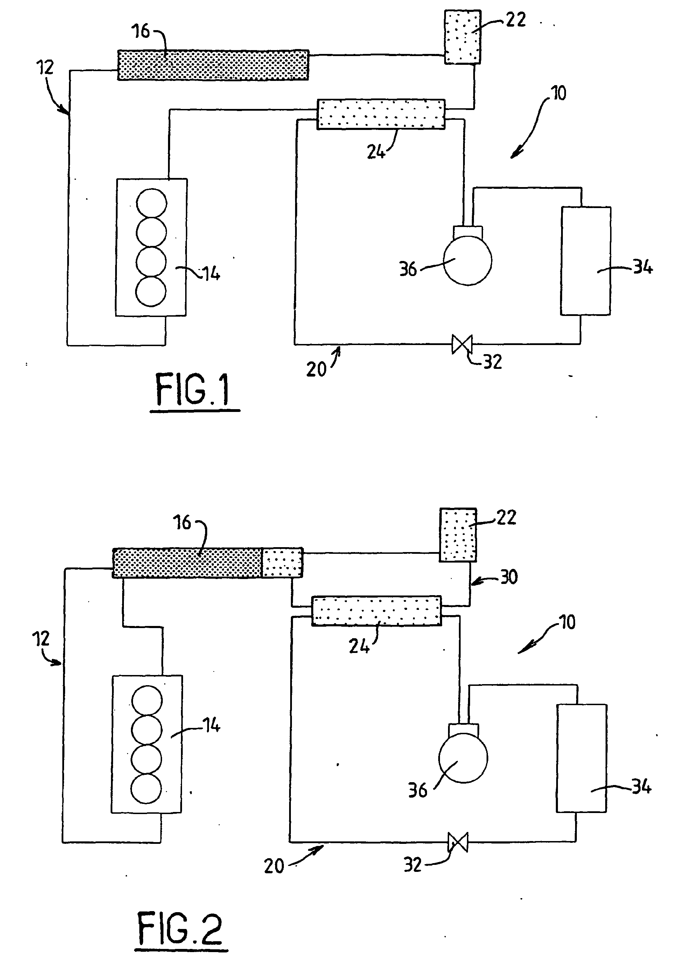

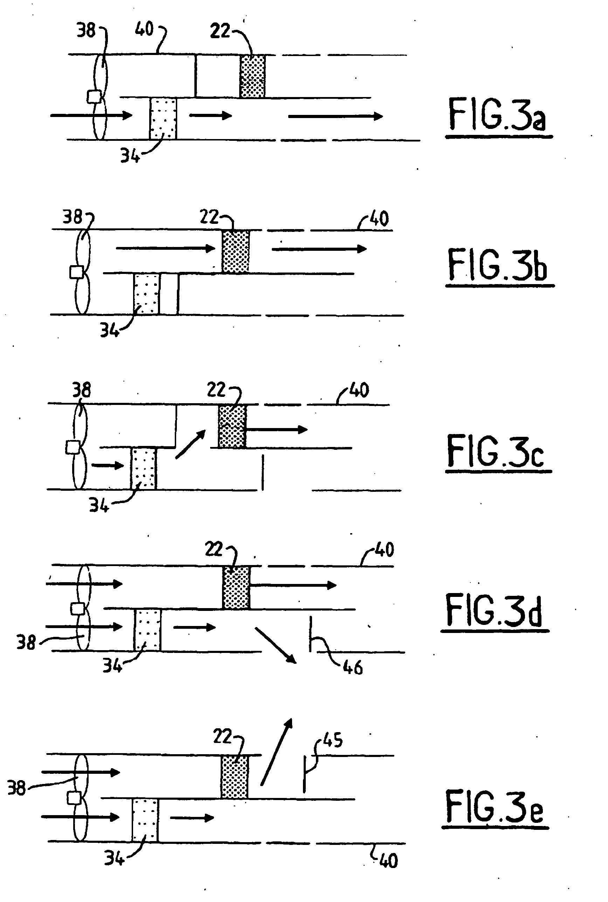

Suivant le mode de réalisation de la figure 1, un dispositif de régulation thermique 10 pour habitacle de véhicule comprend, conformément à l'invention, un premier circuit fermé 12 d'échange thermique à l'intérieur duquel circule un liquide de refroidissement de type connu. Ce premier circuit 12 comprend le moteur 14 du véhicule, un échangeur thermique 16 de type liquide caloporteur/air tel qu'un radiateur de refroidissement à ailettes placé à l'avant d'un compartiment moteur, un échangeur thermique 22 de type liquide caloporteur/air, tel qu'un radiateur de chauffage placé dans une conduite d'aération du dispositif (voir figure 3a à 3e), et un échangeur thermique 24 de type liquide caloporteur/fluide frigorigène tel qu'un condenseur. Dans ce premier circuit d'échange thermique 12, de l'air frais traverse le radiateur de refroidissement 16 pour refroidir le liquide de refroidissement qui circule en son sein. Ce liquide traverse le radiateur fonctionnant sur l'air 22 puis le condenseur 24 avant de venir au contact du moteur 14 pour le refroidir.

Le dispositif de régulation thermique 10 comprend également un deuxième circuit fermé d'échange thermique 20 à l'intérieur duquel circule un fluide frigorigène. Ce deuxième circuit comprend, selon le sens de circulation du fluide frigorigène, le condenseur 24, une vanne de détente 32, un échangeur thermique 34 de type fluide frigorigène/air, tel qu'un évaporateur, et un compresseur 36. Dans ce deuxième circuit 20, le fluide frigorigène se vaporise dans l'évaporateur 34 en enlevant de la chaleur à une source froide telle que de l'air pulsé. Le compresseur 36 aspire le fluide frigorigène vaporisé et le refoule dans le condenseur 24 refroidi par échange thermique avec une source chaude constituée dans le cas présent par le liquide de refroidissement du deuxième circuit d'échange thermique 20. Le fluide frigorigène se condense dans le condenseur 24 et circule en direction de la vanne de détente 32 qui abaisse sa pression avant de l'envoyer vers l'évaporateur 34 terminer son cycle fermé.

Selon le mode de réalisation de la figure 2, le premier circuit d'échange thermique 12 ne comprend que le moteur 14 et le radiateur de refroidissement 16, mais le dispositif comprend par contre un troisième circuit fermé d'échange thermique 30 comprenant le radiateur de refroidissement 16, le radiateur de chauffage 22 et le condenseur 24. Ces deux circuits partagent le même liquide de refroidissement. Avantageusement, comme cela est représenté sur la figure 2, le radiateur de refroidissement 16 présente une surface d'échange modulable répartie entre les premier et troisième circuits d'échange thermique, afin de privilégier le refroidissement du moteur ou le chauffage de l'habitacle, selon les besoins.

Ces dispositifs 10 peuvent avoir cinq modes de fonctionnement décrits ci-après :
- Le dispositif de régulation 10 fonctionne en mode tout froid sur la figure 3a, c'est-à-dire que l'air propulsé par un pulseur 38 traverse l'évaporateur 34 et est refroidit à son contact avant d'être envoyé vers l'habitacle par la conduite d'aération 40 ;
- Le dispositif de régulation 10 fonctionne en mode tout chaud sur la figure 3b, c'est-à-dire que l'air propulsé par le pulseur 38 traverse le radiateur de chauffage 22 et est réchauffé à son contact avant d'être envoyé vers l'habitacle par la conduite d'aération 40 ;
- Le dispositif de régulation 10 fonctionne en mode déshumidification sur la figure 3c, c'est-à-dire que l'air propulsé par le pulseur 38 traverse l'évaporateur 34, est refroidit et desséché à son contact, puis traverse le radiateur de chauffage 22 afin d'être réchauffé avant d'être envoyé vers l'habitacle par la conduite d'aération 40 ;
- Le dispositif de régulation 10 fonctionne en mode « pompe à froid » sur la figure 3d. En hiver, lorsque la température de l'air extérieur est faible et que le moteur du véhicule tourne soit au ralenti, soit à un régime normal, soit à pleine charge, l'évaporateur 34 est traversé par de l'air frais dont la température est plus élevée que celle du fluide de refroidissement circulant dans le troisième circuit d'échange thermique 30. L'air ainsi refroidit par l'évaporateur 34 n'est pas envoyé dans l'habitacle pour éviter de refroidir ses occupants mais il est au contraire évacué hors de l'habitacle par une autre conduite de dérivation (non représentée) obturée par un second volet articulé 46. Cette solution permet d'améliorer le chauffage de l'habitacle car l'évaporateur, en créant des frigories au sein du deuxième circuit d'échange thermique 20, fait monter la température du condenseur 24 et améliore ainsi le rendement thermique du troisième circuit 30 ;
- Le dispositif de régulation 10 fonctionne en mode pompe à chaleur « chaude » sur la figure 3e. En été, lorsque la température de l'air extérieur est élevée et que le moteur du véhicule tourne soit au ralenti, soit à un régime normal, soit à pleine charge, le radiateur de chauffage 22 est traversé par un courant d'air extérieur (ou recyclé) chaud dont la température reste plus basse que celle du liquide caloporteur traversant ledit radiateur 22 au sein du premier circuit 12 (solution de la figure1) ou du troisième circuit 30 (solution de la figure 2). L'air ainsi réchauffé par le radiateur de chauffage 22 n'est pas envoyé dans les conduites d'aération car cela provoquerait un réchauffement fortement nuisible de l'habitacle. Cet air chaud est au contraire évacué vers l'extérieur de l'habitacle, par exemple par une conduite de dérivation (non représentée) obturé par un volet articulé 45. Cette solution, appelée mode « pompe à chaleur été », permet ainsi d'améliorer le refroidissement du moteur 14 en dissipant une puissance calorifique plus importante que dans les dispositifs de l'art antérieur, sans aucune nuisance sur le confort des passagers puisque l'habitacle est refroidit normalement. En effet, le radiateur de chauffage 22 déleste le radiateur de refroidissement 16 d'une partie de la charge thermique qu'il récupère en refroidissant le moteur 14. Cela améliore le rendement du deuxième circuit d'échange thermique 20.

Les avantages des solutions présentées sont les suivants :
- utilisation de la boucle d'air climatisé pour le chauffage additionnel, sans ajout de composant frigorifique de type vanne 4 voies ;
- pas de risque de givrage de l'échangeur qui n'est pas au contact direct avec la neige puisqu'il se trouve dans l'habitacle du véhicule, ou éventuellement dans le compartiment moteur, très proche du tablier ;
- pas de risque d'embuage car la puissance thermique est cédée à l'eau et non sur l'air ;
- utilisation du radiateur de chauffage en radiateur basse température.

Il doit être bien entendu toutefois que ces exemples sont donnés uniquement à titre d'illustration de l'objet de l'Invention dont ils ne constituent en aucune manière une limitation.

Ainsi, les volets 45 et 46 peuvent pivoter de manière modulable entre les positions extrêmes totalement ouverte et totalement fermée afin de faire varier la puissance thermique évacuée de la conduite d'aération.

## Revendications

1. Dispositif (10) de régulation thermique pour habitacle de véhicule automobile comprenant :
- un premier circuit fermé d'échange thermique (12) à l'intérieur duquel circule un liquide de refroidissement et comportant un moteur thermique (14) destiné à être refroidi et un radiateur de refroidissement (16) fonctionnant sur l'air,
- au moins un deuxième circuit fermé d'échange thermique (20) à l'intérieur duquel circule un fluide frigorigène et comportant un condenseur (24), en relation thermique directe ou indirecte avec le premier circuit d'échange thermique (12), un organe de détente (32), un évaporateur fonctionnant sur l'air (34) disposé dans une conduite d'aération pour rafraîchir l'habitacle, et un compresseur (36), et
- un radiateur de chauffage (22) disposé également dans ladite conduite d'aération (40), ledit dispositif comprenant en outre des moyens d'extraction (45, 46) vers l'extérieur de l'habitacle de la puissance thermique dissipée par le radiateur de chauffage (22) ou l'évaporateur (34), respectivement lorsque le radiateur de chauffage (22) fonctionne en mode pompe à chaleur sur l'air en prélevant des calories au premier circuit d'échange thermique (12) ou lorsque l'évaporateur (34) produit des frigories au sein du deuxième circuit d'échange thermique (20), **caractérisé en ce que** ledit radiateur de chauffage (22) est en relation thermique avec ledit condenseur (24).

2. Dispositif selon la revendication 1, dans lequel les moyens d'extraction sont constitués par un volet (45 ; 46) obturant une conduite de dérivation détournant l'air transportant la puissance thermique dissipée pour l'évacuer en dehors de la conduite d'aération (40).

3. Dispositif selon la revendication 2, dans lequel le volet (45) obturant la conduite de dérivation pour l'extraction de la puissance thermique dissipée par le radiateur de chauffage (22) est indépendant du volet (46) de la conduite de dérivation pour l'extraction de la puissance thermique dissipée par l'évaporateur (34).

4. Dispositif selon la revendication 2 ou 3, dans lequel chaque volet (45, 46) est modulable en position de manière à faire varier la puissance thermique extraite en dehors de la conduite d'aération (40).

5. Dispositif selon l'une quelconque des revendications précédentes, **caractérisé en ce qu'**il comprend en outre un troisième circuit fermé d'échange thermique (30) à l'intérieur duquel circule un fluide de refroidissement et comportant le radiateur de refroidissement (16), le condenseur (24) et ledit radiateur de chauffage (22).

6. Dispositif selon l'une quelconque des revendications 1 à 4, dans lequel le radiateur de chauffage (22) et le condenseur (24) appartiennent au premier circuit d'échange thermique (12) et sont traversés par le même liquide de refroidissement que celui traversant le radiateur de refroidissement (16) et le moteur (14).

7. Dispositif selon la revendication 5, dans lequel le radiateur de refroidissement (16) présente une surface d'échange modulable répartie entre le premier et le troisième circuits d'échange thermique, afin de privilégier le refroidissement du moteur (14) ou le chauffage de l'habitacle.

## Claims

1. Device (10) for the thermal control of a motor vehicle passenger compartment, comprising:
- a first closed heat-exchange circuit (12) in which a coolant circulates and which comprises a heat engine (14) that is to be cooled and a cooling radiator (16) operating on the air,
- at least one second closed heat-exchange circuit (20) in which a refrigerant circulates and which comprises a condenser (24) in a direct or indirect thermal relationship with the first heat-exchange circuit (12), an expansion member (32), an evaporator (34) operating on the air and located in a ventilation duct to cool the passenger compartment, and a compressor (36), and
- a heating radiator (22), also located in said ventilation duct (40),
said device further comprising means (45, 46) for ejecting outside of the passenger compartment the thermal power dissipated by the heating radiator (22) or the evaporator (34) depending on whether it is the heating radiator (22) operating in heat pump mode on the air by extracting heat from the first heat-exchange circuit (12) or whether it is the evaporator (34) absorbing heat into the second heat-exchange circuit (20), which device is **characterized in that** said heating radiator (22) is in a thermal relationship with said condenser (24).

2. Device according to Claim 1, in which the ejection means consist of a flap (45; 46) closing a branch pipe diverting air carrying the dissipated thermal power to evacuate it from the ventilation duct (40).

3. Device according to Claim 2, in which the flap (45) closing the branch pipe for ejecting the thermal power dissipated by the heating radiator (22) is independent of the flap (46) of the branch pipe for ejecting the thermal power dissipated by the evaporator (34).

4. Device according to Claim 2 or 3, in which the position of each flap (45, 46) is adjustable so that the thermal power ejected from the ventilation duct (40) can be varied.

5. Device according to any one of the preceding claims, **characterized in that** it also comprises a third closed heat-exchange circuit (30) in which a coolant circulates and which comprises the cooling radiator (16), the condenser (24) and said heating radiator (22).

6. Device according to any one of Claims 1 to 4, in which the heating radiator (22) and the condenser (24) belong to the first heat-exchange circuit (12) and carry the same coolant as that passing through the cooling radiator (16) and the engine (14).

7. Device according to Claim 5, in which the cooling radiator (16) has a variable heat-exchange surface area distributed between the first and third heat-exchange circuits, in order to increase the cooling of the engine (14) or increase the heating of the passenger compartment.

## Patentansprüche

1. Wärmeregulierungsvorrichtung (10) für einen Kraftfahrzeug-Innenraum, die aufweist:
- einen ersten geschlossenen Wärmetauscherkreislauf (12), in dem eine Kühlflüssigkeit zirkuliert und der eine zu kühlende Wärmekraftmaschine (14) und einen luftbetriebenen Kühler (16) enthält,
- mindestens einen zweiten geschlossenen Wärmetauscherkreislauf (20), in dem ein Kältemittel zirkuliert und der einen Kondensator (24), der in direkter oder indirekter thermischer Verbindung mit dem ersten Wärmetauscherkreislauf (12) steht, ein Entspannungsorgan (32), einen luftbetriebenen Verdampfer (34), der in einer Belüftungsleitung zum Kühlen des Innenraums angeordnet ist, und einen Kompressor (36) aufweist, und
- einen Heizkörper (22), der ebenfalls in der Belüftungsleitung (40) angeordnet ist,
wobei die Vorrichtung außerdem Einrichtungen (45, 46) zmr Abführen der vom Heizkörper (22) bzw. vom Verdampfer (34) abgestrahlten Wärmeleistung nach außerhalb des Innenraums aufweist, wenn der Heizkörper (22) im Modus luftbetriebene Wärmepumpe arbeitet, indem Kalorien aus dem ersten Wärmetauscherkreislauf (12) entnommen werden, oder wenn der Verdampfer (34) innerhalb des zweiten Wärmetauscherkreislaufs (20) Frigorien erzeugt, **dadurch gekennzeichnet, dass** der Heizkörper (22) mit dem Kondensator (24) in thermischer Verbindung steht.

2. Vorrichtung nach Anspruch 1, bei der die Abfuhrmittel aus einer Klappe (45; 46) bestehen, die eine Abzweigleitung verschließt, welche die die abgestrahlte Wärmeleistung transportierende Luft umleitet, um sie aus der Belüftungsleitung (40) zu entfernen.

3. Vorrichtung nach Anspruch 2, bei der die die Abzweigleitung zum Abführen der vom Heizkörper (22) abgestrahlten Wärmeleistung verschließende Klappe (45) von der Klappe (46) der Abzweigleitung zum Abführen der vom Verdampfer (34) abgestrahlten Wärmeleistung unabhängig ist.

4. Vorrichtung nach Anspruch 2 oder 3, bei der die Stellung jeder Klappe (45, 46) modulierbar ist, um die aus der Belüftungsleitung (40) abgeführte Wärmeleistung zu variieren.

5. Vorrichtung nach einem der vorhergehenden Ansprüche, **dadurch gekennzeichnet, dass** sie außerdem einen dritten geschlossenen Wärmetauscherkreislauf (30) enthält, in dem ein Kühlfluid zirkuliert und der den Kühler (16), den Kondensator (24) und den Heizkörper (22) aufweist.

6. Vorrichtung nach einem der Ansprüche 1 bis 4, bei der der Heizkörper (22) und der Kondensator (24) zum ersten Wärmetauscherkreislauf (12) gehören und von der gleichen Kühlflüssigkeit durchquert werden wie diejenige, die den Kühler (16) und den Motor (14) durchquert.

7. Vorrichtung nach Anspruch 5, bei der der Kühler (16) eine modulierbare Austauschfläche hat, die zwischen dem ersten und dem dritten Wärmetauscherkreislauf verteilt ist, um die Kühlung des Motors (14) oder das Heizen des Innenraums zu bevorzugen.
